# EUROPÄISCHE PATENTSCHRIFT

(11) **EP 2 623 841 B1**
(45) Veröffentlichungstag und Bekanntmachung des Hinweises auf die Patenterteilung: **02.04.2014**
(21) Anmeldenummer: 12000640.8
(22) Anmeldetag: 02.02.2012
(51) Int. Cl.: F16L 55/132, F16L 55/136, F15B 13/08, F16L 41/03

(54) **Unterteilungsstück für einen Fluidkanal sowie fluidtechnische Vorrichtung mit einem solchen Unterteilungsstück**
Partition piece for a fluid channel and fluids device with such a partition piece
Pièce de division pour un canal de fluide et dispositif de la technologie des fluides doté d'une telle pièce de division

(43) Veröffentlichungstag der Anmeldung: 07.08.2013
(73) Patentinhaber: Festo AG & Co. KG, 73734 Esslingen (DE)
(72) Erfinder: Usinger, Eduard, 73728 Esslingen (DE); Ghimpu-Mundinger, Radu, 71229 Leonberg (DE)
(74) Vertreter: Abel, Martin

(56) Entgegenhaltungen:
- WO-A1-00/38290
- DE-A1- 19 704 006
- US-A- 3 667 640

## Beschreibung

Die Erfindung betrifft ein Unterteilungsstück zur fluiddichten Unterteilung eines in einem Kanalbauteil ausgebildeten Fluidkanals in zwei aufeinanderfolgende Kanalabschnitte, mit einem Unterteilungsabschnitt, der einen zum abdichtenden Andrücken an die Kanalwand des Fluidkanals quer zu einer Längsachse des Unterteilungsstücks verformbaren Dichtungsring aufweist, und mit einer Klemmeinrichtung zum lösbaren Verklemmen des in einen Fluidkanal eingeführten Unterteilungsstücks bezüglich der Kanalwand des Fluidkanals, wobei der Unterteilungsabschnitt rechtwinkelig zur Längsachse des Unterteilungsstückes einen länglichen Querschnitt hat, so dass er bezüglich des das Unterteilungsstück aufnehmenden Fluidkanals verdrehgesichert ist und wobei das Unterteilungsstück zwei einander entgegengesetzte, quer zu seiner Längsachse orientierte Primärseiten aufweist, denen jeweils eine der zwei Längsseiten des Querschnittes des Unterteilungsabschnittes zugeordnet sind.

Die Erfindung betrifft ferner eine fluidtechnische Vorrichtung, mit mindestens einem Kanalbauteil, in dem mindestens ein einen länglichen Querschnitt aufweisender Fluidkanal ausgebildet ist, und mit mindestens einem zur fluiddichten Unterteilung eines in dem Kanalbauteil ausgebildeten Fluidkanals in zwei aufeinanderfolgende Kanalabschnitte dienenden Unterteilungsstück.

Aus der DE 42 13 732 A1 geht eine fluidtechnische Vorrichtung bestehend aus einem Kanalbauteil und einem Unterteilungsstück hervor, wobei in dem Kanalbauteil ein Fluidkanal ausgebildet ist, der mittels des in ihn einsetzbaren Unterteilungsstückes unter Abdichtung in zwei axial aufeinanderfolgende Kanalabschnitte unterteilt werden kann. Das Unterteilungsstück hat einen querschnittsmäßig an den kreisförmigen Querschnitt des Fluidkanals angepassten Unterteilungsabschnitt, der einen als O-Ring ausgebildeten Dichtungsring aufweist, der axial verpressbar ist, um eine radiale Verformung zu erfahren, aufgrund derer er unter Abdichtung an die Kanalwand des Fluidkanals angepresst wird. Die axiale Position des Unterteilungsstückes im Fluidkanal wird mittels einer Klemmeinrichtung fixiert, die über radial verformbare Klemmarme verfügt, welche mittels eines Spannkonus an die Kanalwand des Fluidkanals andrückbar sind. Die Betätigung der Klemmeinrichtung und die Verformung des Dichtungsringes lässt sich mittels einer Betätigungsschraube hervorrufen, die axial in einen Führungskörper des Unterteilungsabschnittes einschraubbar ist. Zum Gegenhalten ist der Führungsabschnitt auf der der Betätigungsschraube abgewandten Seite mit einem Außensechskant versehen. Montage und Demontage des Unterteilungsstückes erfordern somit einen gleichzeitigen Werkzeugzugriff von axial entgegengesetzten Seiten her. Mithin ist es kaum möglich, in ein und demselben Fluidkanal mehr als ein Unterteilungsstück zu montieren. Andererseits besteht jedoch nicht selten das Bedürfnis, einen Fluidkanal eines Kanalbauteils zur Versorgung von mit ihm kommunizierenden Ventilen in mehr als zwei unabhängig voneinander mit Druck beaufschlagbare Kanalabschnitte zu unterteilen.

Aus der DE 19704006 A1 ist ebenfalls eine fluidtechnische Vorrichtung bekannt, die über ein Kanalbauteil mit mindestens einem Fluidkanal verfügt, wobei in den Fluidkanal ein Unterteilungsstück einsetzbar ist, das durch beidseitigen Angriff von Werkzeugen in dem Fluidkanal fixierbar ist, um eine fluiddichte Unterteilung in zwei aufeinanderfolgende Kanalabschnitte hervorzurufen.

Die EP 1 286 059 A2 beschreibt eine Unterteilungsvorrichtung für Fluidkanäle eines Kanalbauteils, die einen nach Art eines Pfropfens im zu unterteilenden Fluidkanal platzierbaren Kanalunterteiler aufweist. Zur axialen Fixierung im Fluidkanal dient ein Verriegelungsteil, das durch eine Bohrung hindurch seitlich in den Kanalunterteiler eingreift. Dieser Kanalunterteiler kann folglich nur dadurch fixiert werden, dass das Kanalbauteil im gewünschten Unterteilungsbereich über eine in den zu unterteilenden Fluidkanal einmündende Bohrung verfügt.

Die DE 10349706 A1 offenbart eine pneumatische Ventilanordnung, die mit internen Fluidkanälen ausgestattet ist, in die ein Kanaltrennelement einsetzbar ist, um den betreffenden Kanal in zwei Teilkanäle aufzuteilen. Auf diese Weise kann eine Drucktrennung realisiert werden.

Die WO 00/38290 A1 offenbart ein Verschlusselement und eine damit ausgestattete fluidtechnische Vorrichtung der eingangs genannten Art, wobei das Verschlusselement einen ovalen Querschnitt aufweist und in einen mit einem ovalen Querschnitt versehenen Kanal eines Kanalbauteils eingesetzt ist. Das Verschlusselement enthält mehrere Dichtungselemente, die mittels zweier Bolzen axial beaufschlagbar sind, damit sie unter Abdichtung radial an die Kanalwand des Kanals mit ovalem Querschnitt angedrückt werden.

Die US 3 667 640 A offenbart ebenfalls ein Verschlusselement mit einem Dichtungselement, wobei das Dichtungselement radial an eine Kanalwand angedrückt wird, wenn es mittels eines Bolzens axial zusammengedrückt wird.

Der Erfindung liegt die Aufgabe zugrunde, Maßnahmen zu treffen, die auf einfache Weise bei Bedarf eine mehrfache Unterteilung eines Fluidkanals in aufeinanderfolgende Kanalabschnitte ermöglichen.

Zur Lösung dieser Aufgabe ist bei einem Unterteilungsstück der eingangs genannten Art vorgesehen, dass die Klemmeinrichtung Bestandteil eines von dem Unterteilungsabschnitt axial abstehenden Klemmfortsatzes ist, dessen Abmessungen in der Längsrichtung des Querschnittes des Unterteilungsabschnittes geringer sind als die in der gleichen Richtung gemessenen Abmessungen des Unterteilungsabschnittes, wobei die Klemmeinrichtung an dem Klemmfortsatz zwei jeweils einer der beiden Primärseiten des Unterteilungsstücks zugeordnete Klemmabschnitte aufweist, die zum Verklemmen oder Lösen des Unterteilungsstückes quer zur Längsachse des Unterteilungsstückes bewegbar sind.

Die Aufgabe wird ferner durch eine fluidtechnische Vorrichtung mit den Merkmalen des Patentanspruches 14 gelöst.

Auf diese Weise besteht die Möglichkeit, hinsichtlich des möglichen Durchflusses mit optimierter, länglicher Querschnittsform ausgestattete Fluidkanäle einfach und kostengünstig in verschiedene Druckzonen zu unterteilen, indem in sie ein oder mehrere Unterteilungsstücke eingesetzt werden, die jeweils einen Unterteilungsabschnitt mit an den Kanalquerschnitt angepasstem Querschnitt aufweisen. Der Unterteilungsabschnitt enthält einen Dichtungsring, der derart quer zur Längsachse des Unterteilungsstückes verformbar ist, dass er unter Gewährleistung einer zuverlässigen Abdichtung an die Kanalwand des Fluidkanals angepresst wird. Der längliche Querschnitt des Unterteilungsabschnittes bewirkt im in den Fluidkanal eingesetzten Zustand eine Verdrehsicherung des Unterteilungsabschnittes, so dass die vorteilhafte Möglichkeit besteht, zur Betätigung des Dichtungsringes und der Klemmeinrichtung erforderliche Manipulationen von lediglich einer axialen Seite des Unterteilungsstückes her durchzuführen. Insbesondere besteht die Möglichkeit, zur Betätigung der Klemmeinrichtung und des Dichtungsringes eine mittels eines geeigneten Schraubwerkzeuges drehbare Betätigungsschraube vorzusehen, zu deren wirksamer Drehbetätigung es keines Gegenhaltens des Unterteilungsabschnittes von einer entgegengesetzten axialen Richtung her bedarf. Mithin können problemlos auch mehrere Unterteilungsstücke in ein und demselben Fluidkanal axial aufeinanderfolgend platziert werden. Dies eröffnet eine variablere Nutzbarkeit eines mit einem Fluidkanal ausgestatteten Kanalbauteils, beispielsweise in Verbindung mit der Fluidversorgung von an dem Kanalbauteil montierten Ventilen.

Besonders vorteilhaft ist die Ausbildung der Klemmeinrichtung als Bestandteil eines von dem Unterteilungsabschnitt axial abstehenden Klemmfortsatzes. Die Abmessungen dieses Klemmfortsatzes sind in der auch als Querschnitts-Längsrichtung bezeichenbaren Längsrichtung des Querschnittes des Unterteilungsabschnittes geringer als die in der gleichen Richtung gemessenen Abmessungen des Unterteilungsabschnittes. Auf diese Weise steht für die Integration der Klemmeinrichtung eine relativ große Baulänge zur Verfügung, ohne die Baulänge des Unterteilungsabschnittes zu vergrößern. Der Unterteilungsabschnitt kann mithin in der Längsrichtung des Unterteilungsstückes relativ kurz ausgebildet werden, was eine Platzierung in einem Fluidkanal zwischen eng aufeinanderfolgenden Einmündungen von quer abzweigenden Kanälen begünstigt.

Der Unterteilungsabschnitt hat aufgrund seines länglichen Querschnittes im Querschnitt betrachtet zwei einander bezüglich der Längsachse gegenüberliegende Schmalseiten und ferner zwei sich bezüglich der Längsachse ebenfalls gegenüberliegende Längsseiten. Die quer zur Längsachse orientierten Seiten des Unterteilungsstückes, die den Längsseiten des Unterteilungsabschnittes zugeordnet sind, sollen als Primärseiten des Unterteilungsstückes bezeichnet sein, die den Schmalseiten des Unterteilungsabschnittes zugeordneten Seiten des Unterteilungsstückes als Sekundärseiten. Die Klemmeinrichtung weist zwei zum Verklemmen oder Lösen des Unterteilungsstückes quer zur Längsachse des Unterteilungsstückes bewegbare Klemmabschnitte auf, die den beiden Primärseiten des Unterteilungsstückes zugeordnet sind.

Vorteilhafte Weiterbildungen der Erfindung gehen aus den Unteransprüchen hervor.

Der Unterteilungsabschnitt verfügt in Anpassung an einen dem Fluidkanal entsprechenden Querschnitt zweckmäßigerweise im Querschnitt betrachtet über zwei einander entgegengesetzte Schmalseiten, an denen er über jeweils eine konvex abgerundete Außenkontur verfügt.

Weiter vorteilhaft kann der Unterteilungsabschnitt in Anpassung an einen entsprechend konturierten Fluidkanal im Querschnitt betrachtet jeweils zwei sich paarweise gegenüberliegende Schmalseiten und Längsseiten aufweisen, von denen nur die beiden Schmalseiten jeweils eine konvex abgerundete Außenkontur haben, während die Längsseiten jeweils geradlinig gestaltet sind.

Ebenso eröffnet die Erfindung die vorteilhafte Möglichkeit, den Unterteilungsabschnitt des Unterteilungsstückes in Anpassung an einen über einen entsprechenden Querschnitt verfügenden Fluidkanal mit einem ovalen oder elliptischen Querschnitt zu versehen.

Der Dichtungsring des Unterteilungsabschnittes hat zweckmäßigerweise eine Längsgestalt entsprechend der Querschnittskontur des Unterteilungsabschnittes beziehungsweise des zur Aufnahme des Unterteilungsstückes herangezogenen Fluidkanals.

Der Unterteilungsabschnitt verfügt zweckmäßigerweise über zwei mit Abstand zueinander angeordnete und sich axial gegenüberliegende Drückflächen, zwischen denen der Dichtungsring angeordnet ist und die mittels einer Betätigungseinrichtung des Unterteilungsstückes relativ zueinander in der Längsrichtung des Unterteilungsstückes bewegbar sind, um die bezüglich der Längsachse des Unterteilungsstückes quer orientierte Verformung des Dichtungsringes hervorzurufen. Die Drückflächen können insbesondere im Rahmen einer Drückbewegung einander angenähert werden, so dass der Dichtungsring zwischen ihnen axial zusammengedrückt wird und sich dabei quer zur Längsachse des Unterteilungsstückes nach außen hin ausdehnt.

Die beiden Drückflächen sind zweckmäßigerweise von den Nutflanken einer bezüglich der Längsachse nach radial außen hin offenen Ringnut des Unterteilungsabschnittes gebildet, in die der Dichtungsring eingesetzt ist.

Vorzugsweise ist das Unterteilungsstück im Bereich des Unterteilungsabschnittes mehrteilig ausgebildet und enthält zum einen einen Dichtungsringträger und zum anderen ein diesbezüglich axial verschiebbares Drückelement. Der Dichtungsringträger weist die eine Drückfläche sowie eine nach radial außen orientierte Tragfläche zur Aufnahme des Dichtungsringes auf, während das Drückelement mit der anderen Drückfläche versehen ist. Beide Komponenten stehen miteinander in axial verschiebbar geführter Weise in Eingriff, insbesondere dadurch, dass der Dichtungsringträger verschiebbar geführt in das Drückelement eintaucht. Zum Hervorrufen der den Dichtungsring axial zusammendrückenden und dabei in Querrichtung verformenden Drückbewegung ist das Unterteilungsstück mit einer Betätigungseinrichtung ausgestattet, die zweckmäßigerweise von der Klemmeinrichtung gebildet ist, so dass durch Betätigung der Klemmeinrichtung gleichzeitig auch die Verformung des Dichtungsringes hervorgerufen werden kann.

Vorzugsweise sind diese beiden Klemmabschnitte von jeweils einem Umfangsabschnitt eines Klemmringes gebildet, der koaxial zur Längsachse des Unterteilungsstückes angeordnet ist und der zum Fixieren des in einer Unterteilungsposition in einem Fluidkanal platzierten Unterteilungsstückes federelastisch aufweitbar ist. Der Klemmring ist zweckmäßigerweise nach Art eines Sprengringes ausgebildet und hat insofern die Form eines an einer Stelle seines Umfanges durchtrennten Ringes mit federelastischen Eigenschaften. Die beiden Klemmabschnitte liegen sich bezüglich der Längsachse des Unterteilungsstückes bevorzugt diametral gegenüber.

Die Klemmeinrichtung ist zweckmäßigerweise mit einer bevorzugt axial orientierten Betätigungsschraube ausgestattet, deren Drehbetätigung sowohl die Betätigung der Klemmeinrichtung als auch die Verformung des Dichtungsringes bewirkt.

Der Klemmfortsatz steht von dem Unterteilungsabschnitt insbesondere mit koaxialer Ausrichtung ab.

Nachfolgend wird die Erfindung anhand der beiliegenden Zeichnung näher erläutert. In dieser zeigen:
- Figur 1: eine bevorzugte Ausführungsform der erfindungsgemäßen fluidtechnischen Vorrichtung, die mit drei Unterteilungsstücken der erfindungsgemäßen Bauart ausgestattet ist, welche im nicht installierten Zustand illustriert sind,
- Figur 2: einen Ausschnitt der Vorrichtung aus Figur 1 in einem Längsschnitt gemäß Schnittlinie II-II im Bereich eines mit einem Unterteilungsstück bestückten Fluidkanals, wobei das Unterteilungsstück noch nicht fixiert ist,
- Figur 3: einen Ausschnitt einer Stirnansicht der Vorrichtung aus Figur 1 im Bereich eines Fluidkanals mit eingesetztem Unterteilungsstück, wobei das Unterteilungsstück den in Figur 2 illustrierten Zustand aufweist und wobei ein strichpunktiert umrahmter Ausschnitt ergänzend vergrößert abgebildet ist,
- Figur 4: einen ausschnittsweisen Längsschnitt entsprechend Figur 2 im befestigten Zustand des Unterteilungsstückes,
- Figur 5: eine Darstellung entsprechend Figur 3 in dem aus Figur 4 ersichtlichen befestigten Zustand des Unterteilungsstückes, wobei ein Detail zur besseren Übersichtlichkeit auch nochmals separat abgebildet ist,

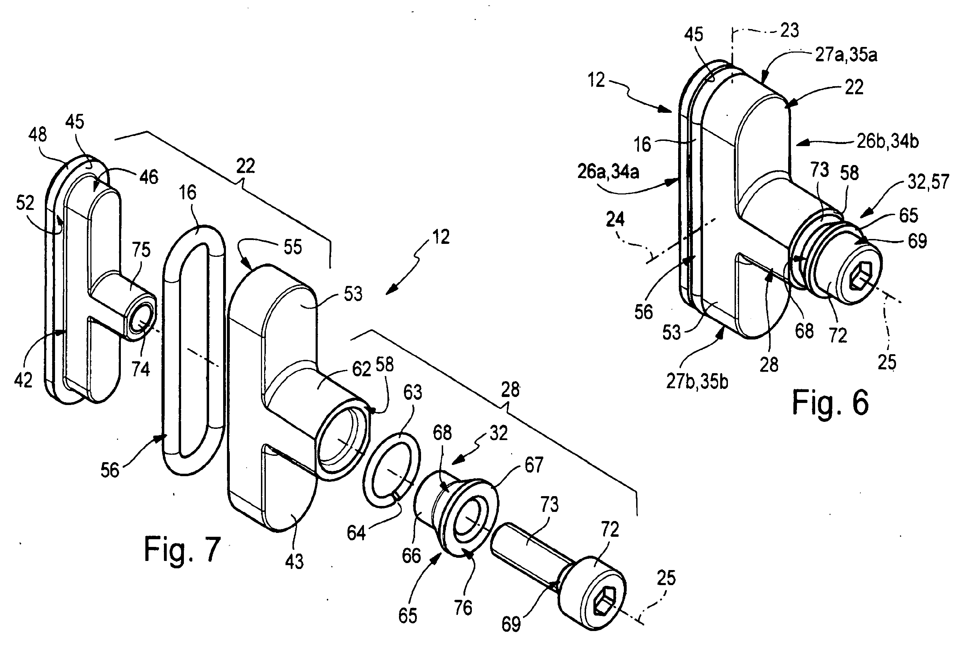

- Figur 6: eine vergrößerte Einzeldarstellung des Unterteilungsstückes bevorzugten Aufbaus und
- Figur 7: eine Explosionsdarstellung des in Figur 6 illustrierten Unterteilungsstückes.

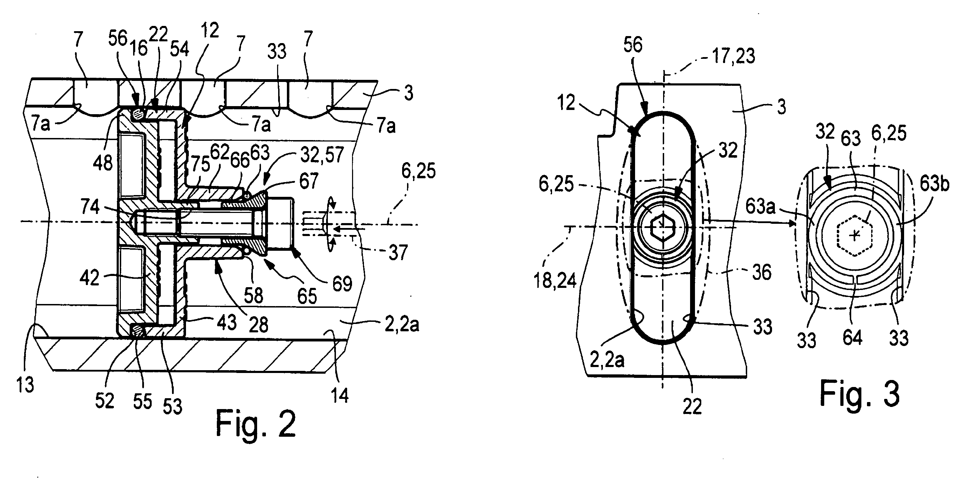

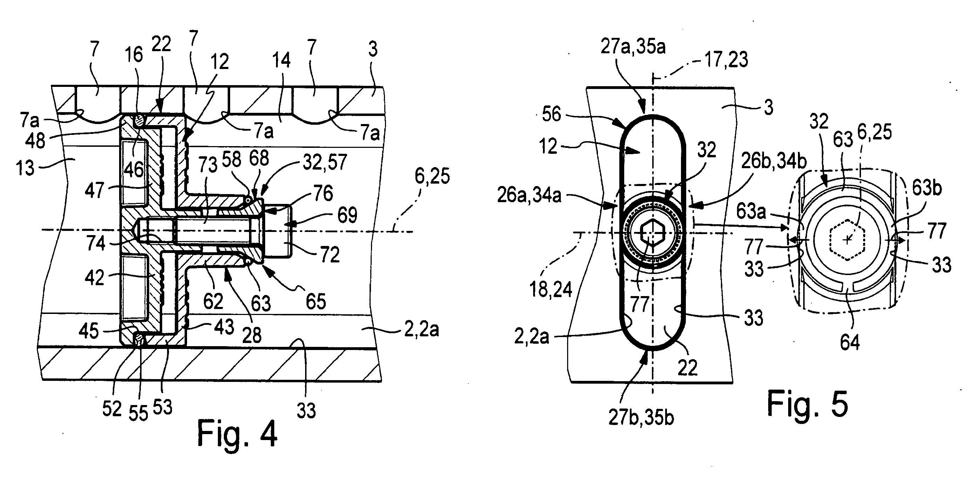

In den in den Figuren 3 und 5 gezeigten vergrößerten Ausschnitten sind das Spreizelement und die Betätigungsschraube der Klemmeinrichtung nicht abgebildet, um einen Blick auf den Klemmring zu ermöglichen.

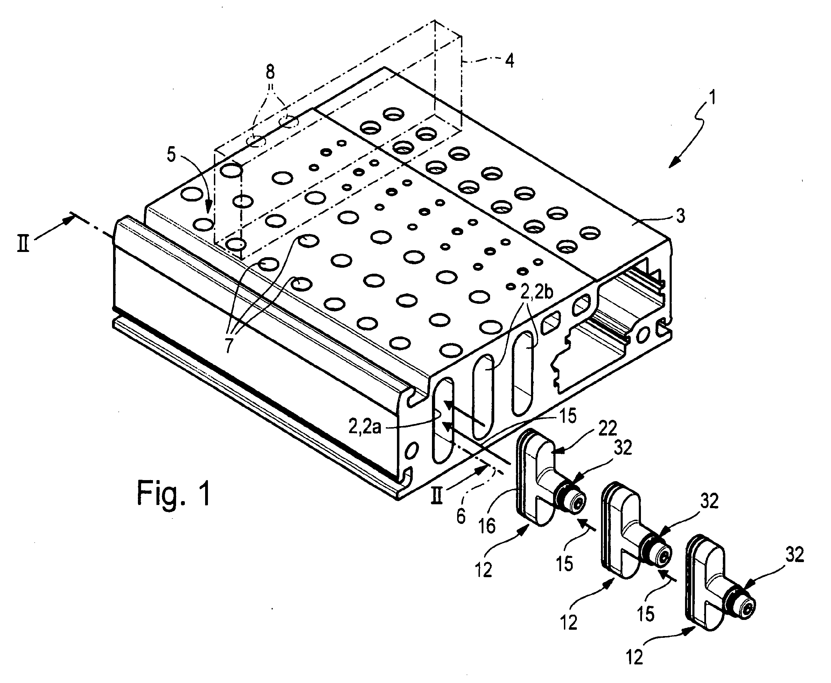

Die Figur 1 zeigt eine fluidtechnische Vorrichtung 1, die ein von mehreren Fluidkanälen 2 durchsetztes Kanalbauteil 3 aufweist, bei dem es sich exemplarisch um einen Träger für mehrere elektrisch betätigbare Ventile 4 handelt, von denen eines beispielhaft strichpunktiert angedeutet ist. Das Kanalbauteil 3 weist eine in der beispielhaften Abbildung nach oben orientierte Bestückungsfläche 5 auf, an der die zur Fluidsteuerung dienenden Ventile 4 insbesondere lösbar montierbar oder montiert sind.

Die mehreren Fluidkanäle 2 bilden beispielsweise zum einen einen Speisekanal 2a und zum anderen zwei Druckentlastungskanäle 2b. Der Speisekanal 2a ist an mindestens eine ein fluidisches Druckmedium bereitstellende Druckquelle anschließbar, insbesondere eine Druckluftquelle, während die Druckentlastungskanäle 2b mit der Atmosphäre verbunden sind.

Die Fluidkanäle 2 haben zweckmäßigerweise einen linearen Verlauf mit einer Längsachse 6.

Von jedem Fluidkanal 2 gehen in Querrichtung mehrere Zweigkanäle 7 ab, die zu der Bestückungsfläche 5 ausmünden. Bevorzugt münden in mindestens einen und zweckmäßigerweise in jeden Fluidkanal 2 mehrere Zweigkanäle 7 an in Achsrichtung der Längsachse 6 beabstandeten Stellen mit jeweils einer Zweigkanalmündung 7a ein.

Wenn mehrere Ventile 4 an der Bestückungsfläche 5 montiert sind, können sie über die Zweigkanäle 7 gemeinsam über den Speisekanal 2a und die Druckentlastungskanäle 2b fluidisch versorgt und entsorgt werden. Mindestens ein in jedem Ventil 4 angeordnetes Ventilglied ist in der Lage, mindestens einen mit einem zu betätigenden Verbraucher verbindbaren Arbeitskanal 8 wahlweise mit dem Speisekanal 2a oder mit einem Druckentlastungskanal 2b zu verbinden. Exemplarisch sind an dem Ventil 4 die Arbeitskanäle 8 so angeordnet, dass zur Verbindung mit einem Verbraucher nicht weiter abgebildete Fluidleitungen direkt anschließbar sind. Alternativ können die Arbeitskanäle 8 auch zur Unterseite des Ventils 4 ausmünden, um mit im Kanalbauteil 3 verlaufenden Fortsetzungs-Arbeitskanälen zu kommunizieren, die so zu einer Außenfläche des Kanalbauteils 3 ausmünden, dass dort zum Verbraucher führende Fluidleitungen angeschlossen werden können.

Die fluidtechnische Vorrichtung 1 ist des Weiteren mit mindestens einem Unterteilungsstück 12 ausgestattet, das die Möglichkeit eröffnet, jeden der Fluidkanäle 2 unter Abdichtung in zwei axial aufeinanderfolgende Kanalabschnitte 13, 14 zu unterteilen. Diese Unterteilungsmöglichkeit wird vor allem in Bezug auf den Speisekanal 2a genutzt, um eine Druckzonentrennung hervorzurufen. Es besteht die Möglichkeit, jeden durch eine Unterteilung erhaltenen Kanalabschnitt 13, 14 unabhängig von den anderen Kanalabschnitten mit einem Druckmedium zu versorgen, so dass an ein und demselben Kanalbauteil 3 montierte Ventile 4 mit unterschiedlichem Druckniveau betrieben werden können.

Die besondere Ausgestaltung des Unterteilungsstückes 12 eröffnet vorzugsweise die Möglichkeit, mehrere Unterteilungsstücke 12 mit axialem Abstand zueinander in ein und demselben Fluidkanal 2 zu installieren, um insgesamt mehr als zwei voneinander abgetrennte Kanalabschnitte zu erhalten, die mit unterschiedlich hohen Fluiddrücken versorgt werden können. Das Ausführungsbeispiel illustriert eine Ausstattung der fluidtechnischen Vorrichtung 1 mit insgesamt drei Unterteilungsstücken 12 gleicher Bauart, die entsprechend der Illustration in Figur 1 in axialer Aufeinanderfolge in ein und demselben Fluidkanal 2, 2a installierbar sind. Zur Installation kann jedes Unterteilungsstück 12 in einer durch einen Pfeil kenntlich gemachten Einschubrichtung 15 von einer der beiden Stirnseiten her in den ausgewählten Fluidkanal 2, 2a eingeschoben werden.

Die Figuren 2 bis 5 zeigen eines der Unterteilungsstücke 12 im in einen Fluidkanal 2 bis zu einem Unterteilungsbereich eingeschobenen Zustand. Die dabei von dem Unterteilungsstück in dem Fluidkanal 2 eingenommene Position sei im Folgenden auch als Unterteilungsposition bezeichnet.

Prinzipiell ist der Unterteilungsbereich beliebig wählbar. In der Regel wird er zwischen zwei in der Achsrichtung der Längsachse 6 aufeinanderfolgend angeordneten Zweigkanalmündungen 7a liegen. Die axial diesseits und jenseits des Unterteilungsstückes 12 befindlichen Zweigkanalmündungen 7a können mithin mit unterschiedlichem Druck versorgt werden.

Die Figuren 2 und 3 illustrieren das eingeschobene Unterteilungsstück 12 in einem unwirksamen Zustand, in dem es noch keine Abdichtung bezüglich des Kanalbauteils 3 bewirkt und auch noch nicht axial unbeweglich fixiert ist. In diesem unwirksamen Zustand kann es in dem Fluidkanal 2 in dessen Längsrichtung beliebig verschoben werden, um es in der gewünschten Unterteilungsposition zu platzieren.

Im Vergleich dazu illustrieren die Figuren 4 und 5 einen wirksamen Zustand des Unterteilungsstückes 12, in dem es in der Kanallängsrichtung unbewegbar am Kanalbauteil 3 fixiert ist und außerdem mittels eines Dichtungsringes 16 derart abdichtend mit dem Kanalbauteil 3 zusammenwirkt, dass es die beiden diesseits und jenseits von ihm angeordneten Kanalabschnitte 13, 14 fluiddicht voneinander abtrennt. Das Unterteilungsstück 12 hat in dem wirksamen Zustand eine Schottfunktion.

Der mit dem Unterteilungsstück 12 bestückbare Fluidkanal 2 hat abweichend von oftmals zu sehenden kreisförmigen Querschnitten einen insbesondere aus Figuren 1, 3 und 5 ersichtlichen länglichen Querschnitt. Der Kanalquerschnitt hat eine im Folgenden auch als Querschnitts-Längsachse 17 bezeichnete Längsachse und eine hierzu rechtwinkelige, im Folgenden auch als Querschnitts-Querachse 18 bezeichnete Querachse.

Damit das Unterteilungsstück 12 seine Abdichtfunktion sicher erfüllen kann, verfügt es über einen in dem wirksamen Zustand den Kanalquerschnitt des Fluidkanals 2 komplett durchbrechungslos ausfüllenden Unterteilungsabschnitt 22, der die gleiche längliche Querschnittskontur hat wie der zu unterteilende Fluidkanal 2. Dementsprechend hat der Unterteilungsabschnitt 22 eine sich in der Längsrichtung seines Querschnittes erstreckende Querschnitts-Längsachse 23 und eine hierzu rechtwinkelige Querschnitts-Querachse 24. Ist das Unterteilungsstück 12 im unwirksamen oder wirksamen Zustand in dem Fluidkanal 2 platziert, fällt seine Querschnitts-Längsachse 23 mit der Querschnitt-Längsachse 17 des Fluidkanals 2 zusammen und fällt darüber hinaus seine Querschnitts-Querachse 24 mit der Querschnitts-Querachse 18 des Fluidkanals 2 zusammen.

Das Unterteilungsstück 12 hat eine Längsachse 25, die im in den Fluidkanal 2 eingesetzten Zustand des Unterteilungsstückes 12 mit der Längsachse 6 des Fluidkanals 2 zusammenfällt. Sie verläuft rechtwinkelig zu der Querschnitts-Längsachse 23 und der Querschnitts-Querachse 24 des Unterteilungsabschnittes 22.

Zur besseren Unterscheidung sollen im Folgenden die beiden Längsseiten des Unterteilungsstückes 12, die einander entgegengesetzt in der Achsrichtung der Querschnitts-Querachse 24 orientiert sind, als Primärseiten 26a, 26b bezeichnet werden. Die beiden diesbezüglich rechtwinkelig orientierten und einander entgegengesetzt in der Achsrichtung der Querschnitts-Längsachse 23 weisenden Längsseiten des Unterteilungsstückes 12 sollen auch als Sekundärseiten 27a, 27b bezeichnet werden.

Zweckmäßigerweise schließt sich an den Unterteilungsabschnitt 22 axial einerseits ein axial abstehender Klemmfortsatz 28 an. Dieser Klemmfortsatz 28 ist mit einer Klemmeinrichtung 32 ausgestattet, die dazu dient, das Unterteilungsstück 12 in seinem wirksamen Zustand axial unverschiebbar bezüglich des Kanalbauteils 3 lösbar zu verklemmen. Hierzu kooperiert die Klemmeinrichtung 32 mit der die Querschnittskontur des Fluidkanals 2 vorgebenden Kanalwand 33.

Im Querschnitt rechtwinkelig zur Längsachse 25 betrachtet hat der Unterteilungsabschnitt 22 jeweils zwei sich paarweise bezüglich der Längsachse 25 diametral gegenüberliegende Längsseiten 34a, 34b und Schmalseiten 35a, 35b. Die Schmalseiten 35a, 35b sind den Sekundärseiten 27a, 27b des Unterteilungsstückes 12 zugeordnet, die Längsseiten 34a, 34b den Primärseiten 26a, 26b des Unterteilungsstückes 12.

In der beim Ausführungsbeispiel verwirklichten, besonders vorteilhaften Querschnittsgestaltung hat der Unterteilungsabschnitt 22 an seinen beiden Schmalseiten 35a, 35b jeweils eine konvex abgerundete Außenkontur und an den beiden Längsseiten 34a, 34b jeweils eine lineare Außenkontur. Die lineare Außenkontur liegt dabei parallel zur Querschnitts-Längsachse 23 des Unterteilungsabschnittes 22. Die konvex abgerundete Außenkontur hat vorzugsweise die Kontur eines Kreisbogens mit zweckmäßigerweise einer Winkelerstreckung von 180°.

Um einen Fluidkanal 2 mit länglichem Querschnitt zu erhalten, könnte alternativ beispielsweise auch auf eine in Figur 3 bei 36 strichpunktiert angedeutete ovale oder elliptische Querschnittskontur zurückgegriffen werden.

Der Querschnitt des Fluidkanals 2 ist komplementär zu demjenigen des Unterteilungsabschnittes 22. Er hat folglich beim Ausführungsbeispiel insbesondere eine Querschnittsform vergleichbar einem Längsschlitz mit abgerundeten Schmalseiten.

Ein mit einem länglichen Querschnitt versehener Fluidkanal 2 hat den Vorteil, bei geringem Platzbedarf einen großen Strömungsquerschnitt für das Druckmedium zur Verfügung zu stellen. Er lässt sich optimal platzsparend in ein Kanalbauteil integrieren.

Durch die komplementäre Querschnittsgestaltung des Unterteilun^{g}sabschnittes 22 und des Fluidkanals 2 wird zum einen in dem wirksamen Zustand des Unterteilungsstückes 12 ein zuverlässiger Dichtkontakt zwischen dem Unterteilungsabschnitt 22 und der Kanalwand 33 gewährleistet und ergibt sich außerdem eine für die Betätigung der Klemmeinrichtung 32 vorteilhafte Verdrehsicherung des Unterteilungsabschnittes 22 bezüglich des das Unterteilungsstück 12 aufnehmenden Fluidkanals 2. Die Verdrehsicherung macht es möglich, die Klemmeinrichtung 32 ausschließlich von einer axialen Seite des Unterteilungsstückes 12 her zu betätigen, ohne zugleich von der entgegengesetzten Axialseite eine Verdrehsicherungs-Manipulation vornehmen zu müssen. In Figur 2 ist strichpunktiert bei 37 ein Betätigungswerkzeug 37 angedeutet, das von der Seite des Klemmfortsatzes 28 her axial mit der Klemmeinrichtung 32 in Eingriff bringbar ist, um selbige zu betätigen. Das gleiche Betätigungswerkzeug 37 kann auch dazu genutzt werden, das Unterteilungsstück 12 bis zur gewünschten Unterteilungsposition in den Fluidkanal 2 einzuschieben. Bei Bedarf kann zur sicheren Positionierung durch einen der dem Unterteilungsbereich nachgelagerten Zweigkanal 7 hindurch vorübergehend ein beispielsweise stabförmiges Anschlagelement hindurchgesteckt werden, durch das der Einschubweg für das Unterteilungsstück 12 definiert vorgebbar ist.

In seiner bevorzugten Ausgestaltung enthält das Unterteilungsstück 12 zwei in Achsrichtung seiner Längsachse 25 relativ zueinander verschiebbar in Eingriff stehende Komponenten in Form eines Dichtungsringträgers 42 und eines Drückelementes 43. Beide Komponenten definieren gemeinsam in ihrem Fügebereich eine zu dem rechtwinkelig zur Längsachse 25 orientierten peripheren Außenumfang 44 des Unterteilungsabschnittes 22 offene Ringnut 45, die sich rings um die Längsachse 25 herum erstreckt. In dieser Ringnut 45 ist der schon erwähnte Dichtungsring 16 aufgenommen.

Der Dichtungsringträger 42 hat eine sich rings um die Längsachse 25 herum erstreckende und quer zur Längsachse 25 nach außen orientierte Tragfläche 46, die den Nutgrund der Ringnut 45 definiert und die Bestandteil eines beispielsweise becheroder napfähnlich konturierten Tragabschnittes 47 des Dichtungsringträgers 42 ist. An diesen Tragabschnitt 47 schließt sich axial ein quer zu der Längsachse 25 nach außen ragender Ringbund 48 an, dessen dem Tragabschnitt 47 zugewandte Stirnfläche eine der beiden Nutflanken der Ringnut 45 bildet und im Folgenden als erste Drückfläche 52 bezeichnet sei. Sie ist in Achsrichtung der Längsachse 25 orientiert.

Das Drückelement 43 ist mit einem bevorzugt napf- oder becherförmigen Drückabschnitt 53 koaxial auf den Dichtungsringträger 42 aufgesteckt, und zwar mit seiner axialen Öffnung voraus, so dass es mit einem peripheren ringförmigen Wandabschnitt 54 den Tragabschnitt 47 axial ein Stückweit übergreift. Dieser ringförmige Wandabschnitt 54 ist konzentrisch zu dem Ringbund 48 angeordnet und bildet mit seiner diesem Ringbund 48 axial zugewandten Stirnfläche eine der ersten Drückfläche 52 zugewandte und mit Abstand gegenüberliegende zweite Drückfläche 55. Die zweite Drückfläche 55 ist zugleich die zweite Nutflanke der Ringnut 45.

Dichtungsringträger 42 und Drückelement 43 sind in Achsrichtung der Längsachse 25 relativ zueinander verschiebbar, um die in Achsrichtung der Längsachse 25 gemessene Nutbreite der Ringnut 45 zu variieren.

Der in der Ringnut 45 einsitzende Dichtungsring 16 hat zweckmäßigerweise eine der Querschnittskontur des Unterteilungsabschnittes 22 entsprechende Umfangskontur. Dementsprechend hat er bevorzugt eine Längsgestalt mit einer zu der Querschnitts-Längsachse 23 parallelen Längsachse. Er ist insbesondere so ausgelegt, dass er auch ohne axiale Komprimierung mit Dichtkontakt ringsum an der Tragfläche 46 anliegt.

In dem aus Figuren 2 und 3 ersichtlichen unwirksamen Zustand nehmen der Dichtungsringträger 42 und das Drückelement 43 relativ zueinander eine Freigabestellung ein, in der der Abstand zwischen den beiden Drückflächen 52, 55 ausreichend groß bemessen ist, um den dazwischen angeordneten Dichtungsring 16 nicht oder nur so wenig axial zu komprimieren, dass seine rechtwinkelig zu der Längsachse 25 nach außen orientierte periphere Dichtfläche 56 eine Außenkontur beschreibt, die geringfügig kleiner ist als die Innenkontur des Fluidkanals 2. Daher liegt sie noch nicht an der Kanalwand 33 an.

Dadurch jedoch, dass der Dichtungsringträger 42 und das Drückelement 43 axial weiter zusammengeschoben werden, lässt sich eine sich axial aneinander annähernde Drückbewegung der beiden Drückflächen 52, 55 hervorrufen, so dass der dazwischen angeordnete Dichtungsring 16 axial zusammengedrückt wird und gleichzeitig eine Verformung rechtwinkelig zu der Längsachse 25 erfährt, im Rahmen derer sich die periphere Dichtfläche 56 quer zu der Längsachse 25 nach außen bewegt und mit hoher Kraft an die den Fluidkanal 2 umgrenzende Kanalwand 33 angedrückt wird. Konkret führt das axiale Zusammenquetschen des bevorzugt aus einem gummielastischen Material bestehenden Ringkörpers des Dichtungsringes 16 zu einer radialen Expansion des Ringkörpers, so dass sich der Dichtungsring 16 zum einen innen an der Tragfläche 46 und zum anderen außen an der den Fluidkanal 2 begrenzenden Wandfläche der Kanalwand 33 abstützt.

Die zum gegenseitigen relativen Verschieben des Dichtungsringträgers 42 und des Drückelementes 43 erforderliche Betätigungskraft ist mittels einer manuell betätigbaren Betätigungseinrichtung 57 des Unterteilungsstückes 12 hervorrufbar. Vorzugsweise ist diese Betätigungseinrichtung 57 unmittelbar von der schon erwähnten Klemmeinrichtung 32 gebildet, so dass mit Betätigung der Klemmeinrichtung 32 zugleich auch die angestrebte Verformung des Dichtungsringes 16 hervorgerufen werden kann.

Das Unterteilungsstück 12 weist einen in Achsrichtung der Längsachse 25 an der einen Axialseite von dem Unterteilungsabschnitt 22 wegragenden Fortsatz auf, bei dem es sich um den oben schon erwähnten Klemmfortsatz 28 handelt, dessen Bezeichnung daher rührt, dass einer seiner Bestandteile die Klemmeinrichtung 32 ist. Der Klemmfortsatz 28 hat die Form eines Stutzens, wobei seine Abmessungen in der Querschnitts-Querrichtung des Unterteilungsabschnittes 22 zumindest im Wesentlichen denjenigen des Unterteilungsabschnittes 22 selbst entsprechen, während seine Abmessungen in der Achsrichtung der Querschnitts-Längsachse 23 des Unterteilungsabschnittes 22 wesentlich geringer sind als diejenigen des Unterteilungsabschnittes 22. Letzterer steht also mit seinen die Schmalseiten 35a, 35b bildenden Abschnitten nach einander entgegengesetzten Richtungen flügelartig von dem Klemmfortsatz 28 ab. Der Klemmfortsatz 28 ist insbesondere koaxial zu dem Unterteilungsabschnitt 22 ausgerichtet. In einer Seitenansicht auf eine der Längsseiten 34a, 34b gesehen, hat das Unterteilungsstück 12 mithin insbesondere eine T-förmige Gestalt.

Die Klemmeinrichtung 32 enthält eine bevorzugt ringförmige, koaxial zu der Längsachse 25 angeordnete Abstützfläche 58, die an dem Drückelement 43 ausgebildet ist und die in die gleiche axiale Richtung weist wie die erste Drückfläche 52. Bevorzugt ist die Abstützfläche 58 ein Bestandteil des Klemmfortsatzes 28, wobei sie sich exemplarisch an der Stirnseite eines von dem Drückabschnitt 53 axial wegragenden Hülsenabschnittes 62 des Drückelementes 43 befindet.

Der Abstützfläche 58 ist axial ein federelastisch radial aufweitbarer Klemmring 63 vorgelagert, der sich an der Abstützfläche 58 abstützen kann.

Bevorzugt ist der Klemmring 63 nach Art eines Sprengringes ausgebildet. In diesem Zusammenhang besteht er aus Material mit federelastischen Eigenschaften, insbesondere aus Federstahl, und weist an einer Stelle seines Umfanges eine Trennstelle 64 auf. Er ist also in der Umfangsrichtung um sein Zentrum herum an einer Trennstelle 64 offen. Diese Trennstelle 64 erlaubt die Aufweitung des Klemmringes 63, deren Breite sich beim Aufweiten des Klemmringes 63 vergrößert. Man kann den Klemmring 63 beim Ausführungsbeispiel auch als geschlitzten Federring bezeichnen. Vorzugsweise ist er kreisringförmig gestaltet, wie auch die ihm zugeordnete Abstützfläche 58.

Die Klemmeinrichtung 32 enthält zum mehr oder weniger starken Aufweiten und dementsprechend Verändern des Durchmessers des Klemmringes 63 ein relativ zu der Abstützfläche 58 axial, also in Achsrichtung der Längsachse 25, bewegbares Spreizelement 65. Das Spreizelement 65 hat einen ringförmigen Querschnitt und taucht von der der Abstützfläche 58 zugeordneten Stirnseite her mit einem hülsenförmigen Führungsabschnitt 66 axial gleitverschieblich in den Hülsenabschnitt 62 ein. Im Anschluss an diesen Führungsabschnitt 66 weist es einen im Querschnitt ringförmigen Spreizabschnitt 67 auf, dessen maximaler Außendurchmesser größer ist als derjenige des Führungsabschnittes 66 und an dem eine der Abstützfläche 58 zugewandte, zu der Längsachse 25 koaxiale ringförmige Konusfläche 68 ausgebildet ist. Die Konusfläche 68 verjüngt sich in Richtung zur Abstützfläche 58 beziehungsweise erweitert sich in der Gegenrichtung. Die Konusfläche 68 ist der Abstützfläche 58 mit Abstand axial vorgelagert, wobei der Klemmring 63 zwischen der Abstützfläche 58 und der Konusfläche 68 angeordnet ist. Das Spreizelement 65 ist in der Lage, mit seinem Spreizabschnitt 67 koaxial in den Klemmring 63 einzutauchen, so dass der Klemmring 63 unter dem Einfluss der ansteigenden Konusfläche 68 aufgespreizt wird.

Die Klemmeinrichtung 32 verfügt zu ihrer Aktivierung und Deaktivierung über ein manuell handhabbares Betätigungsglied, das, beim Ausführungsbeispiel in vorteilhafter Weise als Betätigungsschraube 69 ausgebildet ist.

Die Betätigungsschraube 69 hat einen Schraubenkopf 72 und einen Gewindeschaft 73. Mit ihrem Gewindeschaft 73 durchgreift sie von der der Konusfläche 68 abgewandten Axialseite her in konzentrischer Anordnung das Spreizelement 65 und den Klemmring 63, wobei sich der Gewindeschaft 73 in dem Hülsenabschnitt 62 axial erstreckt und in ein in dem Dichtungsringträger 42 ausgebildetes Innengewinde 74 eingeschraubt ist. Das Innengewinde 74 befindet sich an dem Tragabschnitt 47 und hierbei insbesondere in einem Führungsfortsatz 75 des Tragabschnittes 47, der axial gleitverschieblich geführt in den Hülsenabschnitt 62 des Drückelementes 43 eintaucht. Mit ihrem Schraubenkopf 72 stützt sich die Betätigungsschraube 69 an einer axial in die gleiche Richtung wie die Abstützfläche 58 weisenden Krafteinleitungsfläche 76 des Spreizelementes 65 ab, bei der es sich insbesondere um eine dem Führungsabschnitt 66 axial entgegengesetzte Stirnfläche des Spreizabschnittes 67 handelt.

Im unwirksamen Zustand des Unterteilungsstückes 12 gemäß Figuren 2 und 3 nimmt die Betätigungsschraube 69 eine Lösestellung ein, in der sie keine oder eine nur sehr geringe axiale Kraft auf das Spreizelement 65 ausübt, so dass der Klemmring 63 eine aus Figur 3 ersichtliche Freigabestellung einnimmt, in der sein Außendurchmesser ein Minimum aufweist und insbesondere im Außendurchmesser kleiner ist als die in Achsrichtung der Querschnitts-Querachse 18 gemessene Breite des Fluidkanals 2 in dem Bereich, in dem der Klemmring 63 im in den Fluidkanal 2 eingesetzten Zustand des Unterteilungsstückes 12 zu liegen kommt.

Diejenigen Umfangsabschnitte des Klemmringes 63, die den beiden Primärseiten 26a, 26b des Unterteilungsstückes 12 zugeordnet sind, sind die hinsichtlich der Klemmwirkung wirksamen Abschnitte des Klemmringes 63 und werden daher als Klemmabschnitte 63a, 63b bezeichnet.

Ein durch Verdrehen erfolgendes Betätigen der Betätigungsschraube 69 hat aufgrund des Umstandes, dass sich die Betätigungsschraube 69 mit ihrem Schraubenkopf 72 an dem Spreizelement 65 abstützt und mit ihrem Gewindeschaft 73 in den Dichtungsringträger 42 eingreift, ein axiales Aneinanderannähern des Spreizelementes 65 und des Dichtungsringträgers 42 zur Folge. Hierbei werden die in einem parallelen Kraftflussstrang liegenden Komponenten in Gestalt des Klemmringes 63, des Drückelementes 43 und des Dichtungsringes 16 ebenfalls axial beaufschlagt. Die Folge hiervon sind zwei sich überlagernde Vorgänge. Zum einen wird das Spreizelement 65 mit seiner Konusfläche 68 in den sich an der Abstützfläche 58 abstützenden Klemmring 63 hineingedrückt, so dass der Klemmring 63 an der Konusfläche 68 nach radial außen wandert und in eine aus Figur 5 ersichtliche Klemmstellung aufgeweitet wird. Bei diesem Aufweiten werden die beiden Klemmabschnitte 63a, 63b gemäß Pfeilen 77 quer zur Längsachse 25 auseinandergespreizt und so stark an die Kanalwand 33 angedrückt, dass eine Klemmung stattfindet, aufgrund derer der Klemmring 63 und mithin das gesamte Unterteilungsstück 12 an dem Kanalbauteil 3 in der Längsrichtung des Fluidkanals 2 unbewegbar fixiert ist.

Als weiterer Vorgang findet insbesondere zeitgleich die oben erläuterte Drückbewegung statt, im Rahmen derer die beiden Drückflächen 52, 55 einander angenähert werden, weil der Dichtungsringträger 42 und das Drückelement 43 durch die Kraftwirkung der Betätigungsschraube 69 in diesem Sinne beaufschlagt werden. Somit findet gleichzeitig mit dem Vorgang des klemmenden Fixierens des Unterteilungsstückes 12 ein Abdichten des Unterteilungsabschnittes 22 bezüglich der Kanalwand 33 statt. Zum Einleiten des erforderlichen Betätigungs-Drehmomentes in die Betätigungsschraube 69 ist deren Schraubenkopf 72 mit einem geeignet geformten Betätigungsabschnitt 77 versehen, beispielsweise mit einem Innenmehrkant. In diesen Betätigungsabschnitt 77 kann das als Schraubwerkzeug ausgebildete Betätigungswerkzeug 37 eingesteckt werden.

Das Unterteilungsstück 12 kann jederzeit wieder demontiert oder im Fluidkanal 2 axial umpositioniert werden. Hierzu genügt es, die Betätigungsschraube 69 zu lösen, um das Unterteilungsstück 12 aus dem bis dahin eingenommenen wirksamen Zustand wieder in den unwirksamen Zustand zu versetzen.

Dadurch, dass die Klemmeinrichtung 32 Bestandteil des Klemmfortsatzes 28 ist, der bezüglich den Sekundärseiten 27a, 27b des Unterteilungsabschnittes 22 rechtwinkelig zur Längsachse 25 zurückversetzt ist, kann der Unterteilungsabschnitt 22 in Achsrichtung der Längsachse 25 mit sehr kurzen Abmessungen realisiert werden, so dass das Unterteilungsstück 12 problemlos auch zur Druckzonentrennung zwischen zwei eng aufeinanderfolgend angeordneten Zweigkanalmündungen 7a einsetzbar ist. Derjenige Längenabschnitt des Fluidkanals 2, in dem sich der Klemmfortsatz 28 erstreckt, ist uneingeschränkt zur Fluidführung nutzbar, weil der Klemmfortsatz 28 beabstandet zu den beiden schmalen Umfangsbereichen des Fluidkanals 2 angeordnet ist und sich die Zweigkanalmündungen 7a an mindestens einem dieser beiden schmalen Umfangsbereiche befinden.

Ein besonderer Vorteil des Unterteilungsstückes 12 besteht darin, dass zur Betätigung der Klemmeinrichtung 32 und der damit verbundenen Aktivierung des Dichtungsringes 16 keine Notwendigkeit besteht, den mit der Betätigungsschraube 69 in Gewindeeingriff stehenden Dichtungsringträger 42 aktiv an einem Mitdrehen zu hindern. Die Verdrehsicherung wird automatisch dadurch erzielt, dass dieser Dichtungsringträger 42 aufgrund der zueinander komplementären Querschnittskontur des Unterteilungsabschnittes 22 und des Fluidkanals 2 bezüglich des Fluidkanals 2 verdrehgesichert ist. Exemplarisch hat der Dichtungsringträger 42 im Bereich des Ringbundes 48 die oben schon erwähnte Querschnittskontur des Unterteilungsabschnittes 22 und stützt sich dadurch direkt unter Verdrehsicherung an der Kanalwand 33 des Fluidkanals 2 ab.

Somit genügt es, wenn das Unterteilungsstück 12 zur Betätigung der Klemmeinrichtung 32 von einer Axialseite her zugänglich ist, nämlich von derjenigen Seite, an der sich der Schraubenkopf 72 befindet. Dies wiederum hat den Vorteil, dass problemlos in ein und demselben Fluidkanal 2 mehrere Unterteilungsstücke 12 axial aufeinanderfolgend installierbar sind. Die Unterteilungsstücke 12 können nacheinander bequem von ein und derselben Stirnseite her in den mit ihnen auszustattenden Fluidkanal 2 eingeschoben werden.

## Patentansprüche

1. Unterteilungsstück zur fluiddichten Unterteilung eines in einem Kanalbauteil (3) ausgebildeten Fluidkanals (2) in zwei aufeinanderfolgende Kanalabschnitte (13, 14), mit einem Unterteilungsabschnitt (22), der einen zum abdichtenden Andrücken an die Kanalwand (33) des Fluidkanals (2) quer zu einer Längsachse (25) des Unterteilungsstücks (12) verformbaren Dichtungsring (16) aufweist, und mit einer Klemmeinrichtung (32) zum lösbaren Verklemmen des in einen Fluidkanal (2) eingeführten Unterteilungsstücks (12) bezüglich der Kanalwand (33) des Fluidkanals (2), wobei der Unterteilungsabschnitt (22) rechtwinkelig zur Längsachse des Unterteilungsstückes (12) einen länglichen Querschnitt hat, so dass er bezüglich des das Unterteilungsstück (12) aufnehmenden Fluidkanals (2) verdrehgesichert ist und wobei das Unterteilungsstück (12) zwei einander entgegengesetzte, quer zu seiner Längsachse (25) orientierte Primärseiten (26a, 26b) aufweist, denen jeweils eine der zwei Längsseiten (34a, 34b) des Querschnittes des Unterteilungsabschnittes (22) zugeordnet sind, **dadurch gekennzeichnet, dass** die Klemmeinrichtung (32) Bestandteil eines von dem Unterteilungsabschnitt (22) axial abstehenden Klemmfortsatzes (28) ist, dessen Abmessungen in der Längsrichtung des Querschnittes des Unterteilungsabschnittes (22) geringer sind als die in der gleichen Richtung gemessenen Abmessungen des Unterteilungsabschnittes (22), wobei die Klemmeinrichtung (32) an dem Klemmfortsatz (28) zwei jeweils einer der beiden Primärseiten (26a, 26b) des Unterteilungsstücks (12) zugeordnete Klemmabschnitte (63a, 63b) aufweist, die zum Verklemmen oder Lösen des Unterteilungsstückes (12) quer zur Längsachse (25) des Unterteilungsstückes (12) bewegbar sind.

2. Unterteilungsstück nach Anspruch 1, **dadurch gekennzeichnet, dass** der Unterteilungsabschnitt (22) im Querschnitt betrachtet zwei einander entgegengesetzte Schmalseiten (35a, 35b) hat, an denen er über eine konvex abgerundete Außenkontur verfügt.

3. Unterteilungsstück nach Anspruch 1 oder 2, **dadurch gekennzeichnet, dass** der Unterteilungsabschnitt (22) im Querschnitt betrachtet jeweils zwei sich paarweise gegenüberliegende Schmalseiten (35a, 35b) und Längsseiten (34a, 34b) aufweist, von denen die beiden Schmalseiten (35a, 35b) jeweils eine konvex abgerundete Außenkontur und die beiden Längsseiten (34a, 34b) jeweils eine lineare Außenkontur haben.

4. Unterteilungsstück nach Anspruch 1 oder 2, **dadurch gekennzeichnet, dass** der Unterteilungsabschnitt (22) einen ovalen oder elliptischen Querschnitt hat.

5. Unterteilungsstück nach einem der Ansprüche 1 bis 4, **dadurch gekennzeichnet, dass** der Dichtungsring (16) eine der Querschnittskontur des Unterteilungsabschnittes (22) entsprechende Umfangskontur hat.

6. Unterteilungsstück nach einem der Ansprüche 1 bis 5, **dadurch gekennzeichnet, dass** der Dichtungsring (16) axial zwischen zwei sich in der Längsrichtung des Unterteilungsstückes (12) mit Abstand gegenüberliegenden Drückflächen (52, 55) des Unterteilungsabschnittes (22) angeordnet ist, die relativ zueinander zu einer sich aneinander annähernden Drückbewegung antreibbar sind, durch die der Dichtungsring (16) zum Hervorrufen seiner quer zur Längsachse (25) des Unterteilungsstückes (12) orientierten Verformung axial zusammendrückbar ist.

7. Unterteilungsstück nach Anspruch 6, **dadurch gekennzeichnet, dass** der Dichtungsring (16) in einer quer zur Längsrichtung des Unterteilungsstückes (12) nach außen offenen Ringnut (45) des Unterteilungsabschnittes (22) aufgenommen ist, deren Nutflanken jeweils eine der Drückflächen (52, 55) bilden.

8. Unterteilungsstück nach Anspruch 6 oder 7, **dadurch gekennzeichnet, dass** die eine Drückfläche (52) von einem Dichtungsringträger (42) gebildet ist, der eine quer zur Längsachse (25) des Unterteilungsstückes (12) nach außen orientierte Tragfläche (46) aufweist, auf die der Dichtungsring (16) aufgesetzt ist, wobei die andere Drückfläche (55) von einem axial verschiebbar geführt mit dem Dichtungsringträger (42) zusammenwirkenden Drückelement (43) gebildet ist.

9. Unterteilungsstück nach einem der Ansprüche 6 bis 8, **dadurch gekennzeichnet, dass** es eine zum Hervorrufen der den Dichtungsring (16) axial zusammendrückenden Drückbewegung dienende Betätigungseinrichtung (57) aufweist, die zweckmäßigerweise unmittelbar von der Klemmeinrichtung (32) gebildet ist.

10. Unterteilungsstück nach einem der Ansprüche 1 bis 9, **dadurch gekennzeichnet, dass** die Klemmeinrichtung (32) einen insbesondere koaxial zur Längsachse (25) des Unterteilungsstückes (12) angeordneten, federelastisch aufweitbaren Klemmring (63) aufweist, der zweckmäßigerweise nach Art eines Sprengringes ausgebildet ist und dem zu seiner Betätigung ein in Achsrichtung der Längsachse (25) des Unterteilungsstückes (12) bewegbares, mit einer Konusfläche (68) in ihn eingreifendes Spreizelement (65) zugeordnet ist.

11. Unterteilungsstück nach Anspruch 10, **dadurch gekennzeichnet, dass** die beiden Klemmabschnitte (63a, 63b) von jeweils einem Umfangsabschnitt des Klemmringes (63) gebildet sind.

12. Unterteilungsstück nach einem der Ansprüche 1 bis 11, **dadurch gekennzeichnet, dass** die Klemmeinrichtung (32) eine Betätigungsschraube (69) aufweist, die insbesondere in Achsrichtung der Längsachse (25) des Unterteilungsstückes (12) ausgerichtet ist und deren Drehbetätigung sowohl die Betätigung der Klemmeinrichtung (32) als auch eine Verformung des Dichtungsringes (16) bewirkt.

13. Unterteilungsstück nach einem der Ansprüche 1 bis 12, **dadurch gekennzeichnet, dass** der Klemmfortsatz (28) von dem Unterteilungsabschnitt (22) koaxial absteht.

14. Fluidtechnische Vorrichtung, mit mindestens einem Kanalbauteil (3), in dem mindestens ein einen länglichen Querschnitt aufweisender Fluidkanal (2) ausgebildet ist, und mit mindestens einem zur fluiddichten Unterteilung des Fluidkanals (2) in zwei aufeinanderfolgende Kanalabschnitte (13, 14) dienenden Unterteilungsstück (12) nach einem der Ansprüche 1 bis 13.

## Claims

1. Dividing piece for the fluid-tight division of a fluid passage (2) formed in a passage component (3) into two consecutive passage sections (13, 14), with a dividing section (22) which has a seal ring (16) which may be deformed for pressing against the passage wall (33) of the fluid passage (2) for sealing transversely to a longitudinal axis (25) of the dividing piece (12), and with a clamping device (32) for the releasable clamping of the dividing piece (12) inserted in a fluid passage (2) relative to the passage wall (33) of the fluid passage (2), wherein the dividing section (22) has an elongated cross-section at right-angles to the longitudinal axis of the dividing piece (12), so that it is anti-twist-locked relative to the fluid passage (2) accommodating the dividing piece (12) and wherein the dividing piece (12) has two primary sides (26a, 26b) opposite one another and oriented transversely to its longitudinal axis (25) and each assigned to one of the two long sides (34a, 34b) of the cross-section of the dividing section (22), **characterised in that** the clamping device (32) is part of a clamping extension (28) protruding axially from the dividing section (22) and having dimensions which are smaller in the longitudinal direction of the cross-section of the dividing section (22) than the dimensions of the dividing section (22) measured in the same direction, wherein the clamping device (32) has on the clamping extension (28) two clamping sections (63a, 63b), each assigned to one of the two primary sides (26a, 26b) of the dividing piece (12) and movable transversely to the longitudinal axis (25) of the dividing piece (12) for clamping or releasing the dividing piece (12).

2. Dividing piece according to claim 1, **characterised in that** the dividing section (22), viewed in cross-section, has two opposite narrow sides (35a, 35b) on which it has a convex rounded external contour.

3. Dividing piece according to claim 1 or 2, **characterised in that** the dividing section (22), viewed in cross-section, has two narrow sides (35a, 35b) and two long sides (34a, 34b) each lying opposite one another in pairs, wherein the two narrow sides (35a, 35b) each have a convex rounded external contour and the two long sides (34a, 34b) each have a linear external contour.

4. Dividing piece according to claim 1 or 2, **characterised in that** the dividing section (22) has an oval or elliptical cross-section.

5. Dividing piece according to any of claims 1 to 4, **characterised in that** the seal ring (16) has a circumferential contour corresponding to the cross-sectional contour of the dividing section (22).

6. Dividing piece according to any of claims 1 to 5, **characterised in that** the seal ring (16) is arranged axially between two pressure surfaces (52, 55) of the dividing section (22) lying opposite one another with clearance in the longitudinal direction of the dividing piece (12) and able to be driven relative to one another to make a pressing movement in which they approach one another and through which the seal ring (16) may be axially pressed together to generate its deformation transversely to the longitudinal axis (25) of the dividing piece (12).

7. Dividing piece according to claim 6, **characterised in that** the seal ring (16) is held in an annular slot (45) of the dividing section (22) which is open to the outside transversely to the longitudinal direction of the dividing piece (12), and the slot sides of which each form one of the pressure surfaces (52, 55).

8. Dividing piece according to claim 6 or 7, **characterised in that** one pressure surface (52) is formed by a seal ring support (42) which has a support surface (46) oriented outwards transversely to the longitudinal axis (25) of the dividing piece (12), and over which the seal ring (16) is slipped, while the other pressure surface (55) is formed by a pressure element (43) with guided axial movement and working in conjunction with the seal ring support (42).

9. Dividing piece according to any of claims 6 to 8, **characterised in that** it has an actuating device (57) serving to generate the pressing movement which presses the seal ring (16) axially together, and expediently formed by the clamping device (32).

10. Dividing piece according to any of claims 1 to 9, **characterised in that** the clamping device (32) has a spring-elastic expandable clamping ring (63), arranged in particular coaxially to the longitudinal axis (25) of the dividing piece (12) and expediently in the manner of a snap ring and assigned for its actuation an expander element (65) movable in the axial direction of the longitudinal axis (25) of the dividing piece (12), in which it engages with a conical surface (68).

11. Dividing piece according to claim 10, **characterised in that** the two clamping sections (63a, 63b) are in each case formed by a circumferential section of the clamping ring (63).

12. Dividing piece according to any of claims 1 to 11, **characterised in that** the clamping device (32) has an actuating screw (69) which is aligned in particular in the axial direction of the longitudinal axis (25) of the dividing piece (12) and has a rotary actuation which effects both the actuation of the clamping device (32) and also a deformation of the seal ring (16).

13. Dividing piece according to any of claims 1 to 12, **characterised in that** the clamping extension (28) protrudes coaxially from the dividing section (22).

14. Fluidic device with at least one passage component (3) in which is formed at least one fluid passage (2) with an elongated cross-section, and with at least one dividing piece (12) according to any of claims 1 to 13 serving for the fluidic division of the fluid passage (2) into two consecutive passage sections (13, 14).

## Revendications

1. Pièce de division pour la division étanche au fluide d'un canal fluidique (2) réalisé dans un composant de canal (3) en deux sections de canal (13, 14) consécutives, avec une section de division (22) qui présente un anneau étanche (16) déformable pour le pressage étanche contre la paroi de canal (33) du canal fluidique (2) transversalement à un axe longitudinal (25) de la pièce de division (12), et avec un dispositif de serrage (32) pour le serrage amovible de la pièce de division (12) introduite dans un canal fluidique (2) relative à la paroi de canal (33) du canal fluidique (2), la section de division (22) présentant perpendiculairement à l'axe longitudinal de la pièce de division (12) une section transversale oblongue de sorte qu'elle soit bloquée en rotation par rapport au canal fluidique (2) recevant la pièce de division (12) et la pièce de division (12) présentant deux côtés primaires (26a, 26b) orientés transversalement à son axe longitudinal (25), opposés, auxquels est associé respectivement l'un des deux côtés longitudinaux (34a, 34b) de la section transversale de la section de division (22), **caractérisée en ce que** le dispositif de serrage (32) fait partie d'un prolongement de serrage (28) s'élevant axialement de la section de division (22), dont les dimensions sont plus petites dans le sens longitudinal de la section transversale de la section de division (22) que les dimensions mesurées dans le même sens de la section de division (22), le dispositif de serrage (32) sur le prolongement de serrage (28) présentant deux sections de serrage (63a, 63b) qui sont associées respectivement à l'un des deux côtés primaires (26a, 26b) de la pièce de division (12) et sont mobiles pour le serrage ou le desserrage de la pièce de division (12) transversalement à l'axe longitudinal (25) de la pièce de division (12).

2. Pièce de division selon la revendication 1, **caractérisée en ce que** la section de division (22) présente, vu en section transversale, deux côtés étroits (35a, 35b) opposés, sur lesquels elle dispose d'un contour extérieur arrondi de manière convexe.

3. Pièce de division selon la revendication 1 ou 2, **caractérisée en ce que** la section de division (22) présente, vu en section transversale respectivement, deux côtés étroits (35a, 35b) et des côtés longitudinaux (34a, 34b) en regard par paire, dont les deux côtés étroits (35a, 35b) ont respectivement un contour extérieur arrondi de manière convexe et les deux côtés longitudinaux (34a, 34b) ont respectivement un contour extérieur linéaire.

4. Pièce de division selon la revendication 1 ou 2, **caractérisée en ce que** la section de division (22) présente une section transversale ovale ou elliptique.

5. Pièce de division selon l'une quelconque des revendications 1 à 4, **caractérisée en ce que** l'anneau étanche (16) présente un contour périphérique correspondant au contour de section transversale de la section de division (22).

6. Pièce de division selon l'une quelconque des revendications 1 à 5, **caractérisée en ce que** l'anneau étanche (16) est disposé axialement entre deux surfaces de pression (52, 55) en regard l'une de l'autre à distance dans le sens longitudinal de la pièce de division (12) de la section de division (22), qui peuvent être entraînées l'une par rapport à l'autre en un mouvement de pression de manière à se rapprocher l'une de l'autre, par lequel l'anneau étanche (16) peut être compressé axialement pour susciter sa déformation orientée transversalement à l'axe longitudinal (25) de la pièce de division (12).

7. Pièce de division selon la revendication 6, **caractérisée en ce que** l'anneau étanche (16) est logé dans une rainure annulaire (45) ouverte vers l'extérieur transversalement au sens longitudinal de la pièce de division (12) de la section de division (22), dont les flancs de rainure forment chacun l'une des surfaces de pression (52, 55).

8. Pièce de division selon la revendication 6 ou 7, **caractérisée en ce que** l'une surface de pression (52) est constituée d'un support d'anneau étanche (42) qui présente une surface porteuse (46) orientée vers l'extérieur transversalement à l'axe longitudinal (25) de la pièce de division (12), sur laquelle l'anneau étanche (16) est placé, l'autre surface de pression (55) étant formée par un élément de pression (43) coagissant par guidage axial coulissant avec le support d'anneau étanche (42).

9. Pièce de division selon l'une quelconque des revendications 6 à 8, **caractérisée en ce qu'**elle présente un dispositif d'actionnement (57) servant à susciter le mouvement de pression compressant axialement l'anneau étanche (16), qui est constitué de manière appropriée directement par le dispositif de serrage (32).

10. Pièce de division selon l'une quelconque des revendications 1 à 9, **caractérisée en ce que** le dispositif de serrage (32) présente un anneau de serrage (63) pouvant être élargi de manière élastique, disposé en particulier coaxialement à l'axe longitudinal (25) de la pièce de division (12), qui est réalisé de manière appropriée comme un circlip et auquel est associé pour son actionnement un élément d'écartement (65) s'engageant avec une surface conique (68) dans celui-ci, mobile dans le sens axial de l'axe longitudinal (25) de la pièce de division (12).

11. Pièce de division selon la revendication 10, **caractérisée en ce que** les deux sections de serrage (63a, 63b) sont formées respectivement par une section périphérique de l'anneau de serrage (63).

12. Pièce de division selon l'une quelconque des revendications 1 à 11, **caractérisée en ce que** le dispositif de serrage (32) présente une vis d'actionnement (69) qui est orientée en particulier dans le sens axial de l'axe longitudinal (25) de la pièce de division (12) et dont l'actionnement rotatif provoque non seulement l'actionnement du dispositif de serrage (32) mais aussi une déformation de l'anneau étanche (16).

13. Pièce de division selon l'une quelconque des revendications 1 à 12, **caractérisée en ce que** le prolongement de serrage (28) s'élève coaxialement de la section de division (22).

14. Dispositif fluidique avec au moins un composant de canal (3), dans lequel au moins un canal fluidique (2) présentant une section transversale oblongue est réalisé, et avec au moins une pièce de division (12) servant à la division étanche au fluide du canal fluidique (2) en deux sections de canal consécutives (13, 14) selon l'une quelconque des revendications 1 à 13.
